# EUROPEAN PATENT APPLICATION

(11) **EP 1 848 134 A2**
(43) Date of publication of application: **24.10.2007**
(21) Application number: 07105442.3
(22) Date of filing: 02.04.2007
(51) Int. Cl.: H04H 1/00

(54) **Method and apparatus for providing internet protocol datacasting service in digital audio broadcasting system**

(30) Priority: 20.10.2006 KR 20060102477; 10.04.2006 US 790553 P
(71) Applicant: Samsung Electronics Co., Ltd., Seoul 442-742 (KR)
(72) Inventor: Park, Jeong-hoon, Seoul (KR); Ryu, Ga-hyun, Gyeonggi-do (KR); Cho, Kyung-sun, Seoul (KR); Youm, Sun-hee, Seoul (KR); Park, Sung-il, Gyeonggi-do (KR); Kim, Jong-hwa, Gyeonggi-do (KR)
(74) Representative: Brandon, Paul Laurence

(57) **Abstract**

Provided are an apparatus and method for providing an Internet Protocol Datacasting (IPDC) service in a Digital Audio Broadcasting (DAB) system. A digital broadcasting transmission apparatus for providing an IPDC service includes an IPDC processing unit (710) which generates IP packet data by packetizing data to be transmitted and generates information on a configuration of the IP packet data; a service linkage information (SLI) processing unit (720) which generates SLI which is linkage information between the IP packet data and an IP bearer which delivers the IP packet data; and a transmitter (730) which multiplexes and transmits the SLI and the IP packet data. Accordingly, by generating and using SLI for linking a DAB system and an IPDC system, the DAB system can effectively provide an IPDC service.

## Description

Apparatuses and methods consistent with the present invention relate to a Digital Audio Broadcasting (DAB) system.

Digital Audio Broadcasting (DAB), which provides not only audio quality of the high quality level of service of a Compact Disc (CD) but also various additional services, such as weather, traffic, entertainment, and video, using an up-to-date speech coding method having a high compression ratio, has become widely available, and Digital Multimedia Broadcasting (DMB), which is further advanced from DAB, has also become available.

Internet Protocol Datacasting (IPDC) is broadcasting technology of delivering digital content, such as games, video and audio files, or computer programs, to a plurality of users via a broadcast network. Since IDPC is broadcasting or one-to-many distribution technology, IP-based digital content can be efficiently delivered to a plurality of viewers with high cost effectiveness using IDPC. Digital Video Broadcasting-Home (DVB-H) provides a service using the IPDC technology, and DAB or DMB also needs technology that provides IP-based broadcasting content as in DVB-H.

Preferred embodiments of the present invention aim to provide a method and apparatus for efficiently providing an Internet Protocol Datacasting (IPDC) service in a DAB system.

According to an aspect of the present invention, there is provided a digital broadcasting transmission apparatus for providing an IPDC service, the apparatus comprising: an IPDC processing unit which generates IP packet data by packetizing data that is to be transmitted and generates information on a configuration of the IP packet data; a service linkage information (SLI) processing unit which generates SLI which is linkage information between the packetized IP packet data and an IP bearer which delivers the IP packet data; and a transmitter multiplexing and transmitting the SLI and the IP packet data.

According to another aspect of the present invention, there is provided a digital broadcast reception apparatus for providing an IPDC service, the apparatus comprising: a receiver which determines whether a received digital broadcast signal provides the IPDC service and generates IP packet data and service linkage information (SLI), which is linkage information between the IP packet data and an IP bearer which delivers the IP packet data, from the digital broadcast signal; a SLI processing unit which processes the SLI; and an IPDC processing unit which processes the IP packet data using the SLI.

According to another aspect of the present invention, there is provided a digital broadcasting transmission method of providing an IPDC service, the method comprising: generating IP packet data by packetizing data that is to be transmitted; generating information on a configuration of the IP packet data; generating service linkage information (SLI) which is linkage information between the packetized IP packet data and an IP bearer delivering the IP packet data; and multiplexing and transmitting the SLI and the IP packet data.

According to another aspect of the present invention, there is provided a digital broadcast reception method of providing an IPDC service, the method comprising: determining whether a received digital broadcast signal provides the IPDC service; generating IP packet data from the digital broadcast signal; acquiring and processing service linkage information (SLI), which is linkage information between the IP packet data and an IP bearer delivering the IP packet data, from the digital broadcast signal; and processing the IP packet data using the SLI.

Further features of the present invention are set out in the appended claims.

The present invention will become more apparent by describing in detail exemplary embodiments thereof with reference to the attached drawings in which:
FIG. 1 illustrates a frame structure of a Digital Audio Broadcasting (DAB) system;
FIG. 2 illustrates a multiple-structure of a DAB service according to an exemplary embodiment of the present invention;
FIG. 3 is a conceptual diagram of a digital broadcasting system for providing an Internet Protocol Datacasting (IPDC) service of a DAB system according to an exemplary embodiment of the present invention;
FIG. 4 illustrates a protocol stack of a DAB-IPDC service of a DAB system according to an exemplary embodiment of the present invention;
FIG. 5 is a table for describing Service Linkage Information (SLI) according to an exemplary embodiment of the present invention;
FIG. 6 is a block diagram of a DAB transmission apparatus for transmitting an IPDC service according to an exemplary embodiment of the present invention;
FIG. 7 is a block diagram of a DAB reception apparatus for receiving an IPDC service according to an exemplary embodiment of the present invention;
FIG. 8 illustrates a process of accessing a DAB-IPDC service according to an exemplary embodiment of the present invention;
FIG. 9 is a flowchart illustrating a method of transmitting a DAB-IPDC service according to an exemplary embodiment of the present invention; and
FIG. 10 is a flowchart illustrating a method of receiving a DAB-IPDC service according to an exemplary embodiment of the present invention.

Hereinafter, the present invention will be described in detail by explaining exemplary embodiments of the invention with reference to the attached drawings.

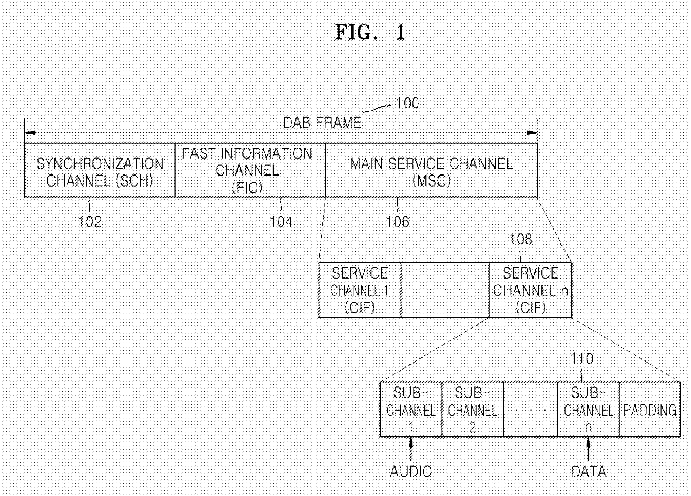

FIG. 1 illustrates a frame structure of a Digital Audio Broadcasting (DAB) system.

Referring to FIG. 1, a DAB frame 100 includes a Synchronization Channel (SCH) 102, a Fast Information Channel (FIC) 104, and a Main Service Channel (MSC) 106.

The SCH 102 includes information for synchronization in decoding of the DAB frame 100. The FIC 104 includes various kinds of control information, urgent data requiring high-speed transmission, and service information. Unlike the MSC 106, since signals of the FIC 104 do not pass through a time interleaver, the FIC 104 has an advantage in that high-speed transmission is possible, but has a disadvantage in that the amount of data transmitted is limited to 32 bytes.

The MSC 106 includes data for a plurality of audio services, video services, and data services. As illustrated in FIG. 1, a single DAB frame 100 includes a plurality of service channels 108, each service channel 108 including a plurality of sub-channels 110. Individual sub-channels 110 are multiplexed into the MSC 106 by independently undergoing an encoding and interleaving process.

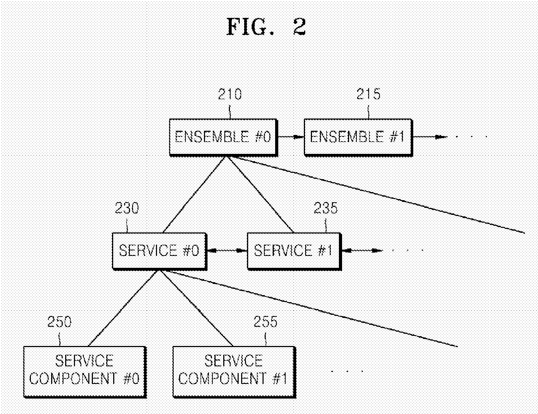

FIG. 2 illustrates a multiple-structure of a DAB service according to an exemplary embodiment of the present invention. Referring to FIG. 2, the multiple-structure of a DAB service has ensembles, services, and service components.

A plurality of encoded audio streams and a plurality of pieces of data are respectively channel-coded and multiplexed with system data into a single bitstream, called an "ensemble". A single broadcasting station generally provides a single ensemble. "Service" means an output selected by a user, such as a program service or a data service. "Service component" means a component constituting a service. Service components of a service are linked to each other by Multiplex Configuration Information (MCI). Each service component is transmitted by being carried on a sub-channel or a Fast Information Data Channel (FIDC).

The DAB service according to the current exemplary embodiment includes at least two ensembles, an ensemble #0 210 and an ensemble #1 215. The ensemble #0 210 provides at least two services, a service #0 230 and a service #1 235. The service #0 230 includes at least two service components, a service component #0 250 and a service component #1 255.

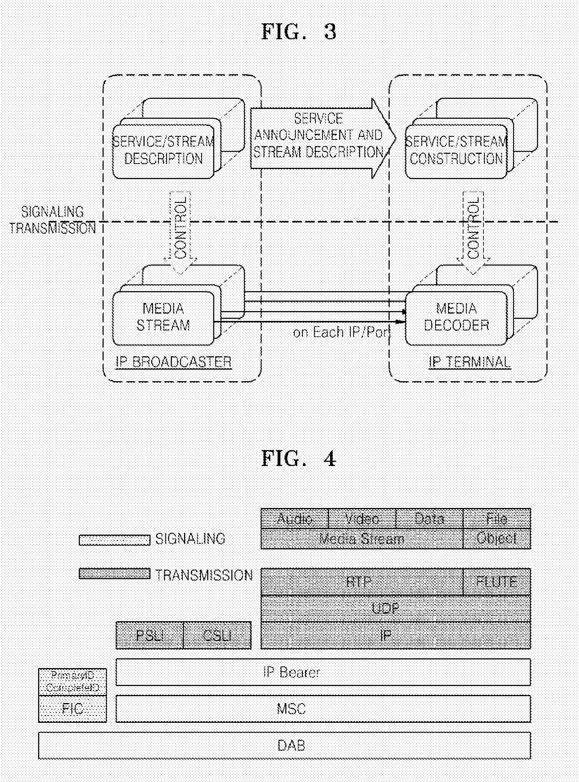

FIG. 3 is a conceptual diagram of a digital broadcasting system for providing an Internet Protocol Datacasting (IPDC) service of a DAB system according to an exemplary embodiment of the present invention.

The term "IPDC service" means providing IP-based content containing an elementary stream (e.g., audio, video, and other data) and files by an IP bearer. The term "DAB-IPDC service" means providing an IPDC service of a DAB system. As illustrated in FIG. 3, a DAB-IPDC system is an IPDC system in a DAB environment. In a broadcasting system, an IPDC system has a one-directional network, provides a carousel signaling method, does not provide interactions, and provides a limited data bandwidth.

A DAB-IPDC system has two mechanisms. One mechanism is signaling for service set-up, and the other is transport of data (media stream, object, etc.). The signaling mechanism of the DAB-IPDC system must provide service description information and service announcements.

In a bi-directional network, a Session Description Protocol (SDP) can be transmitted by a Real-Time Streaming Protocol (RTSP). The SDP is used to describe multimedia sessions for the purpose of session announcements, session invitations, and opening of other sessions. However, for a broadcast network, the SDP must be transmitted in a given broadcasting environment in order to complete an IPDC service in the broadcasting environment. This information must support random access in a broadcast service. Thus, the information must be periodically transmitted.

An IP broadcaster is an IPDC service transmission apparatus according to an exemplary embodiment of the present invention, and an IP terminal is an IPDC service reception apparatus according to an exemplary embodiment of the present invention. The IP terminal builds a service/stream by receiving a service announcement and service/stream description information from the IP broadcaster. The IP terminal decodes a media stream received from the IP broadcaster according to service/stream configuration information.

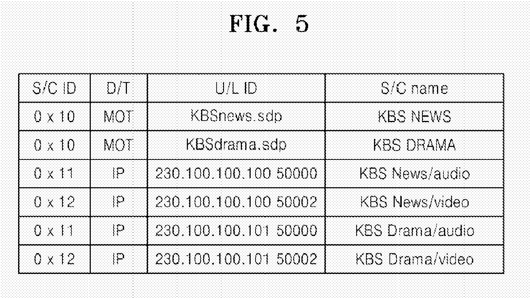

FIG. 4 illustrates a protocol stack of a DAB-IPDC service of a DAB system according to an exemplary embodiment of the present invention.

Referring to FIG. 4, in the DAB-IPDC protocol stack, a layer for signaling and a layer for IP data transport exist. Audio, video, data, and/or a media stream are compressed, encoded, and packetized into Real-time Transport Protocol (RTP) packet data, and then packetized into RTP/Universal Transport Protocol (UTP) packet data, and finally packetized into RTP/UTP/IP packet data. Files and/or objects are packetized into File Delivery over Unidirectional Transport (FLUTE) packet data, and then packetized into FLUTE/UDP packet data, and finally packetized into FLUTE/UTP/IP packet data.

Hereinafter, either RTP/UTP/IP packet data or FLUTE/UTP/IP packet data is called IP packet data. The IP packet data is carried on an IP bearer, such as an MPEG-2 transport stream, and then carried on an MSC of DAB. Primary Service Linkage Information (PSLI), Complete SLI (CSLI), and primary identification (ID) and complete ID carried on an FIC, which are illustrated in FIG. 4, will be described later.

FIG. 5 is a table for describing SLI according to an exemplary embodiment of the present invention.

A DAB system and IPDC system have a unique multiplexing structure respectively. In a DAB-IPDC according to an exemplary embodiment of the present invention, SLI, which is used for identifying each of a plurality of layers of the multiplexing structure, is provided by a DAB system. IPDC service announcement and set-up information will be provided by signaling of the DAB system.

In order to construct a DAB-IPDC service, information for establishing an IPDC service must be delivered to the DAB system. One part of this information is SDP information that is information on a configuration of IP packet data, and the other is an identifier for identifying IP data carried on an IP bearer.

SLI defines linkage information of an IPDC service in the DAB system in order to effectively access the IPDC service. SLI also notifies and determines each IPDC service from the IP bearer of the DAB system. The IP bearer is a transport mechanism for transmitting IP packet data, adapts IP data, and performs linkage using each piece of IPDC service related information (IP address, port number, service type, etc.) and the SDP of each IPDC service as an adaptation identifier. By providing SLI, a receiver accesses IP data of an IPDC service in a specific access method using an IP bearer adaptation identifier and processes the IP data.
SLI includes the information described below:
- location of delivered SDP information or SDP information;
- location of an IP data stream in a DAB-IPDC service; and
- identifier for identifying IP packet data from a DAB-IP bearer.

The location of an IP data stream in a DAB-IPDC service indicates a location of IP data in the DAB system, like the location of a sub-channel in DAB, and the identifier for identifying IP packet data from the DAB-IP bearer indicates a transport frame for transmitting the IP data, e.g., a Program Identifier (PID) of an MPEG-2 transport stream packet. Thus, in a single sub-channel, a location of IP packet data can be found using only the identifier for identifying IP packet data, and in order to find IP packet data in DAB, both the location of an IP data stream in a DAB-IPDC service and the identifier for identifying IP packet data from the DAB-IP bearer are desired.

Referring to FIG. 5, SLI includes a sub-channel ID (S/C ID), a data service component type (D/T), an Upper Layer (U/L) ID for identifying an IP data packet, such as a file name or a Uniform Resource Locator (URL), and a sub-channel (S/C) name corresponding to a title of a sub-channel.

Since a DAB-IPDC service typically uses a plurality of multiplexing structures, a DAB-IPDC receiver cannot access a single IPDC service at a single service selection. However, in an exemplary embodiment of the present invention, a primary IPDC service, which can be accessed at a single service selection, is defined. Thus, a DAB-IPDC service according to an exemplary embodiment of the present invention can be divided into a primary IPDC service and a complete IPDC service.

The primary IPDC service is defined as an IPDC service accessed at a single service selection in a DAB-IPDC service. The complete IPDC service is defined as an IPDC service accessed at two or more service selections in a DAB-IPDC service.

There are two types of SLI defined, i.e., PSLI for the primary IPDC service of a DAB-IPDC service and CLSI for complete IPDC service of a DAB-IPDC service. The SLI is defined for a single sub-channel, and each sub-channel has PSLI and CLSI. A plurality of IPDC services can be provided through a single sub-channel.

PSLI is signaling information requisite to a DAB-IPDC service and supports fast access to the primary IPDC service of a DAB-IPDC service. Structures of PSLI are illustrated in Tables 1, 2, and 3.

PSLI includes information described below as illustrated in Table 1:

DAB-IPDC bearer identifier assigned to the primary IPDC service; and SDP of the primary IPDC service.

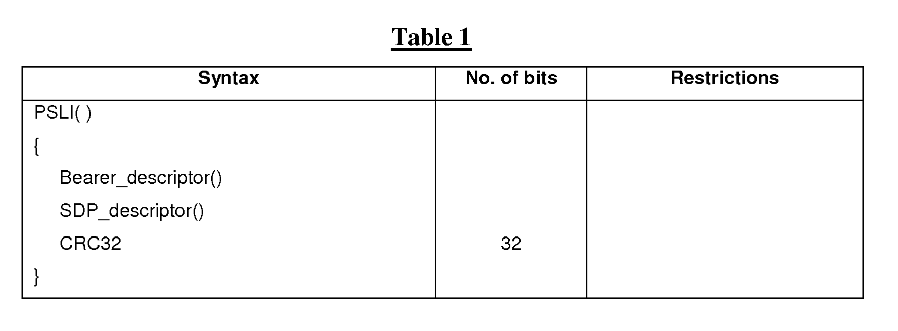

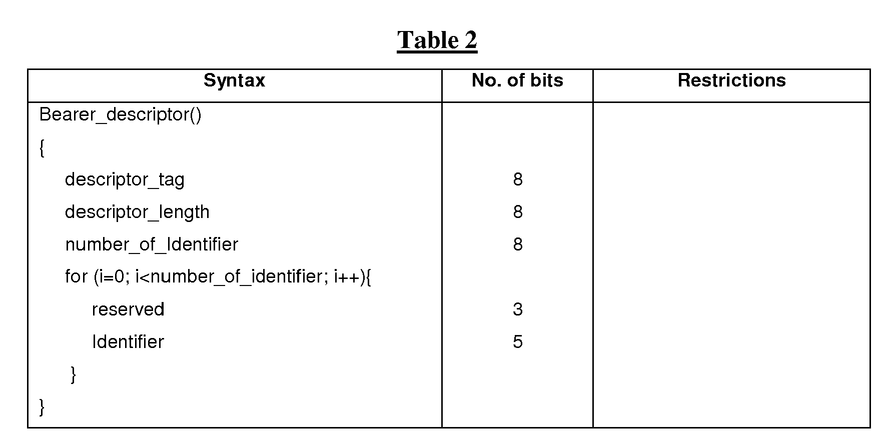

In Table 2, "number_of_identifier" is an 8-bit field and indicates the number of DAB-IP bearer identifiers assigned to the primary IPDC service. "Identifier" indicates a DAB-IP bearer identifier assigned to the primary IPDC service.

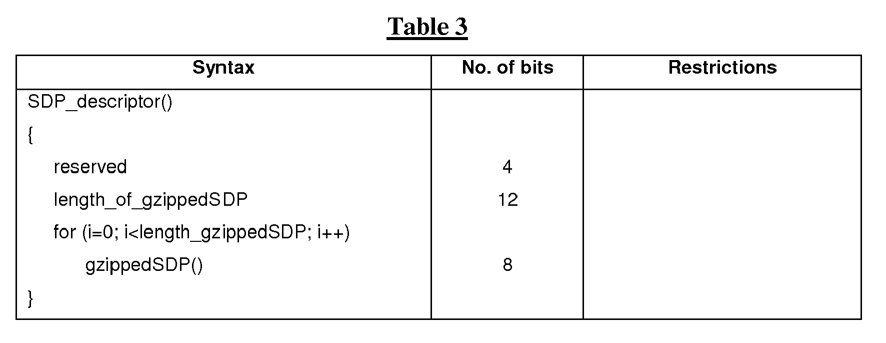

In Table 3, "length_of_gzippedSDP" is a 12-bit field and indicates the number of bytes of a compressed (gzipped) SDP coming next to a length field, and does not exceed the value of 4093.

CSLI describes complete service linkage information of a DAB-IPDC service in each sub-channel. CSLI announces title information, location information, etc. CSLI can be encoded using a binary format having the structure illustrated in tables described below.
CSLI defines the tables described below.
- Service_linkage_table: all sets of IPDC services are included in a single DAB-IPDC service.
- Service_bundle_table: all sets of IPDC services are included in two or more DAB-IPDC services. This table is used when a single service is built by assembling streams located in several sub-channels, DAB services, or ensembles, free from the limitation of a single sub-channel. Table 4 illustrates table IDs of CSLI.

**Table 4**

| **Table_ID** | **Semantics** |
|---|---|
| 0X00 | Reserved |
| 0x01 | Service_linkage_table |
| 0x02 | Service_bundle_table |
| 0x3 ~ Ox7F | Reserved for future use |

Table 5 illustrates a structure of CSLI.

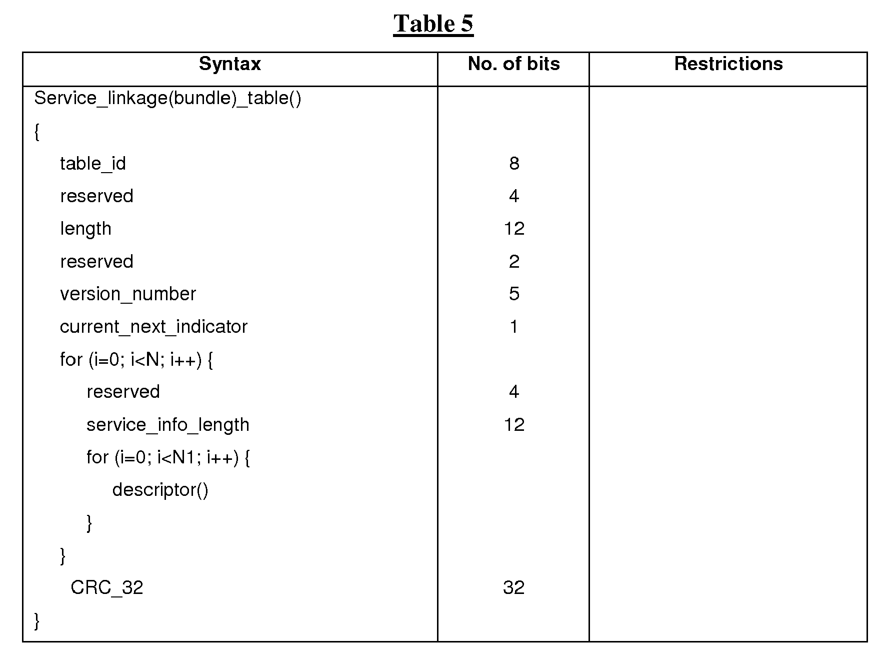

In Table 5, "table_id" is an 8-bit field and indicates an identifier of a CSLI table.

"Length" is a 12-bit field and indicates the number of bytes of a table coming next to the length field.

"Version_number" is a 5-bit field and indicates a version of the CSLI table. The version number shall be incremented by 1 module 32 when a change in the information carried within the CSLI occurs. If "current_next_indicator" is set to 1, the version number shall be that of the currently applicable CSLI table. If "current_next_indicator" is set to 0, the version number shall be that of the next applicable CSLI table.

That is, "current_next_indicator" is a 1-bit indicator, and "current_next_indicator" set to 1 indicates that the CSLI table sent is currently applicable, and "current_next_indicator" set to 0 indicates that the delivered CSLI table is not yet applicable but shall be a next CSLI table to be valid.

"Service(stream)_info_length" is a 12-bit field, and first two bits are "00". The remaining 10 bits designates the number of bytes of descriptors immediately following the service information length field.

Descriptors used in CSLI are described below.
- Title_descriptor: It provides a title of an IPDC service.
- URL_descriptor: It provides a remote location of an SDP object of an IPDC service.
- SDP_descriptor: It provides an SDP object of an IPDC service.
- Bearer_descriptor: It provides bearer information of an IPDC service.

**Table 6 defines "tag_id" of descriptors used in CSLI.**

| **Tag_ID** | **Semantics** |
|---|---|
| 0x80 | Reserved |
| 0x81 | Title_descriptor |
| 0x82 | URL_descriptor |
| 0x83 | SDP_descriptor |
| 0x84 | Bearer_descriptor |
| 0x85 ~ 0xFE | Reserved for future use |
| 0xFF | Reserved |

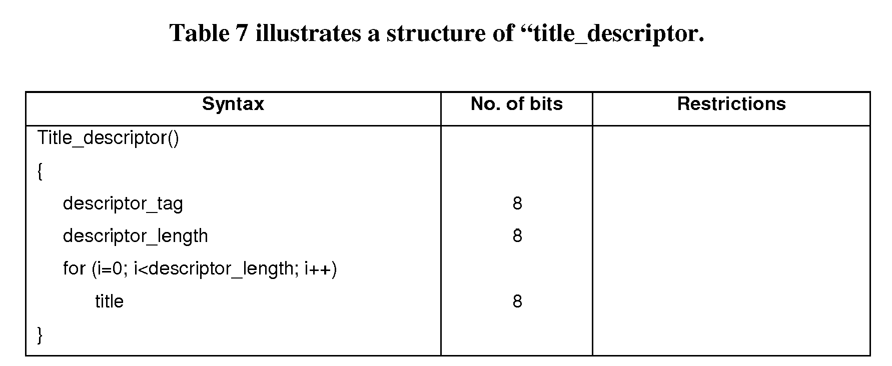

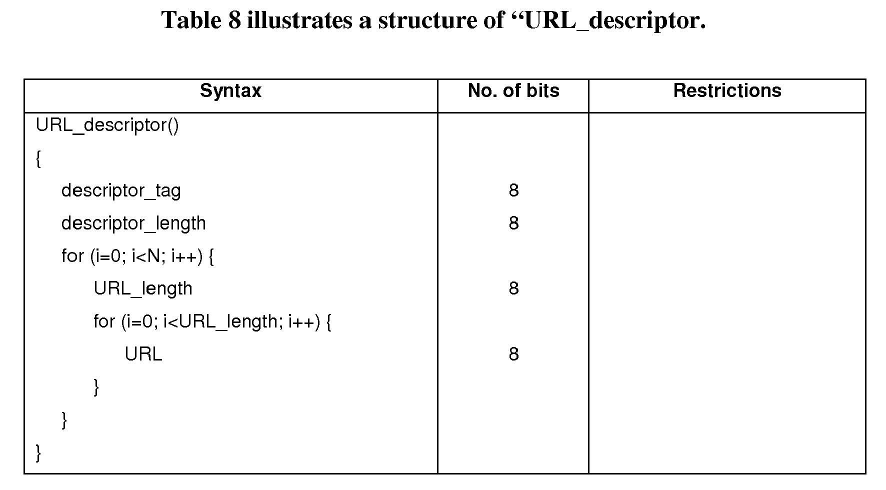

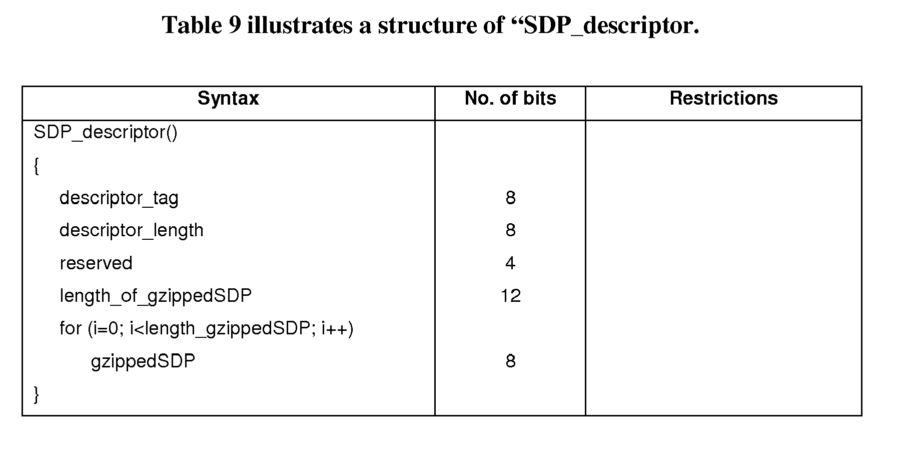

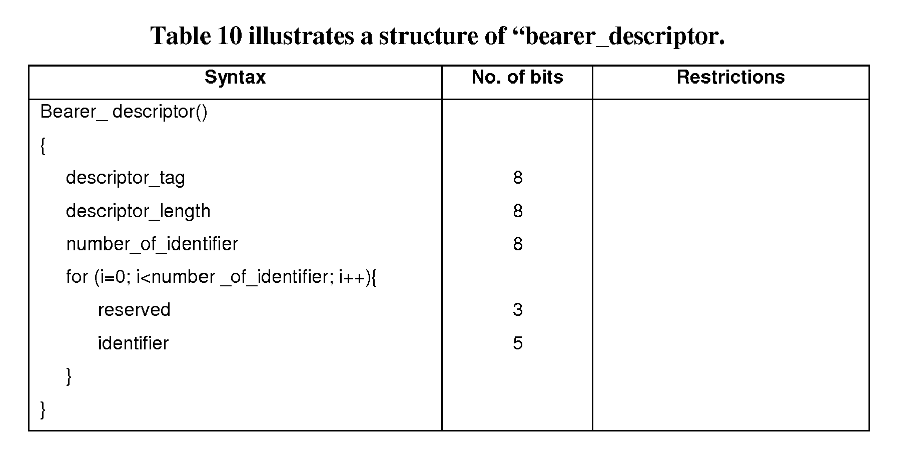

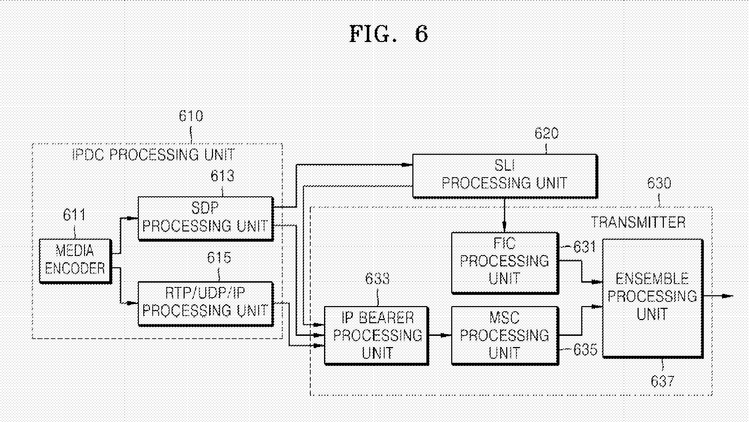

FIG. 6 is a block diagram of a DAB transmission apparatus for transmitting an IPDC service according to an exemplary embodiment of the present invention.

Referring to FIG. 6, the DAB transmission apparatus providing an IPDC service in a digital broadcasting system according to an exemplary embodiment of the present invention includes an IPDC processing unit 610, an SLI processing unit 620, and a transmitter 630.

The IPDC processing unit 610 generates IP packet data by packetizing data that is to be transmitted and generates information on a configuration of the IP packet data. The IPDC processing unit 610 can include a media encoder 611, an SDP processing unit 613, and an RTP/UDP/IP processing unit 615.

The media encoder 611 encodes media such as audio, video, and images. The media encoder 611 also encodes media configuration information such as MPEG-4 Binary Format for Scene (BIFS) and Light Application Scene Representation (LASeR). The SDP processing unit 613 generates information on a configuration of IP packet data according to Request for Comments (RFC) 2327. The RTP/UDP/IP processing unit 615 generates IP packet data by performing RTP/UDP/IP packetization of encoded media.

The SLI processing unit 620 generates SLI which is linkage information between the packetized IP packet data and an IP bearer delivering the IP packet data. The SLI processing unit 620 constructs SLI for every IPDC service. SLI includes the information on a configuration of IP packet data, i.e., a location of an SDP, a location of an IP data stream, and an identifier for identifying the IP packet data from the IP bearer. The IP bearer is a transport stream for transmitting IP packets and may be an MPEG-2 transport stream. The identifier for identifying the IP packet data is information for identifying the transport stream for transmitting IP packets and may be, for example, a PID of an MPEG-2 transport stream packet.

SLI includes PSLI, which is service linkage information of the primary IPDC service which can be accessed at a single selection, and CSLI, which is service linkage information of the complete IPDC service which can be accessed at two or more selections. The PSLI may contain a location of SDP information or SDP information itself.

The transmitter 630 multiplexes and transmits the SLI and the IP packet data. The transmitter 630 includes an FIC processing unit 631, an IP bearer processing unit 633, an MSC processing unit 635, and an ensemble processing unit 637.

The FIC processing unit 631 receives information required to generate an FIC, or SLI from the SLI processing unit 620 and processes the received information. The FIC processing unit 631 also processes received information so that information indicating that an IPDC service is provided through a current DAB sub-channel is included in a Fast Information Group (FIG) 0/13 user application type field of the FIC. The FIC processing unit 631 can process the received information so that the PSLI is included in the FIC. The FIC processing unit 631 also processes received information so that a primary ID, which is an identifier of a transport frame having the PSLI, and a complete ID, which is an identifier of a transport frame having the CSLI, are included in the FIG 0/13 user application type field of the FIC.

The IP bearer processing unit 633 generates a transport stream that is to be transmitted in an MSC stream mode, e.g., an MPEG-2 transport stream packet, by multiplexing the IP packet data. The MSC processing unit 635 constructs and processes an MSC for transmitting data in DAB. The MSC processing unit 635 can also process the MSC so that the SLI and the SDP information is transmitted through a Multimedia Object Transfer (MOT) protocol of the MSC.

By transmitting a DAB-IPDC service in this way, a reception terminal can access the IP packet data using the SLI included in every IPDC service, and thus the reception terminal can quickly provide an IPDC service. In addition, if SDP is included in the PSLI, the reception terminal can provide an IPDC service based on the PSLI by analyzing the FIC. Thus, a user can receive an IPDC service by simply selecting the IPDC service.

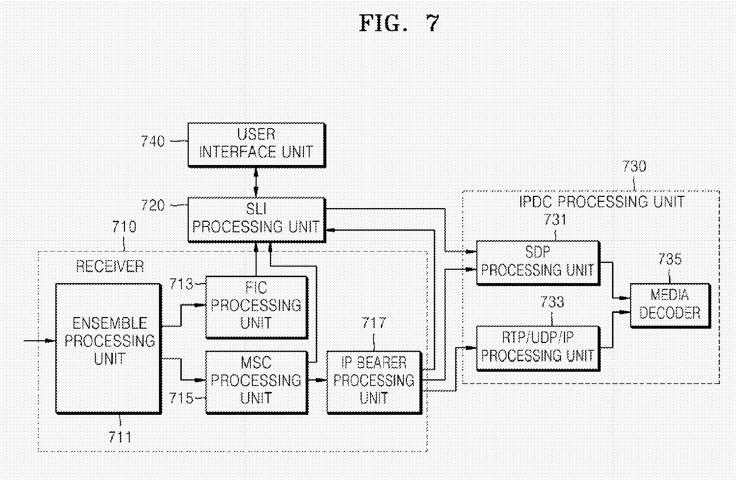

The ensemble processing unit 637 constructs an ensemble stream by multiplexing FIC data and an MSC stream and transmits the ensemble stream. FIG. 7 is a block diagram of a DAB reception apparatus for receiving an IPDC service according to an exemplary embodiment of the present invention.

Referring to FIG. 7, the DAB reception apparatus providing an IPDC service in a digital broadcasting system according to an exemplary embodiment of the present invention includes a receiver 710, an SLI processing unit 720, an IPDC processing unit 730, and a user interface unit 740.

The receiver 710 determines whether a received digital broadcasting signal provides an IPDC service. The receiver 710 can determine by analyzing FIG 0/13 of an FIC whether a received digital broadcast signal provides an IPDC service. The receiver 710 also generates IP packet data and SLI, which is linkage information between the IP packet data and an IP bearer delivering the IP packet data, by processing the digital broadcast signal. The receiver 710 includes an ensemble processing unit 711, an FIC processing unit 713, an MSC processing unit 715, and an IP bearer processing unit 717.

The ensemble processing unit 711 demultiplexes FIC data and an MSC stream from a received ensemble stream. The FIC processing unit 713 constructs signaling information by processing the FIC data. The FIC processing unit 713 also transmits information required to access SLI, or transmits SLI itself, to the SLI processing unit 720. In particular, the FIC processing unit 713 acquires a primary ID, which is an identifier of a transport frame having the PSLI, and a complete ID, which is an identifier of a transport frame having the CSLI, from an FIC and transmits the acquired primary ID and complete ID to the SLI processing unit 720.

The MSC processing unit 715 constructs the SLI, SDP information, and an IP data stream by processing the MSC stream. The IP bearer processing unit 717 generates a transport frame, e.g., an MPEG-2 transport stream packet, by demultiplexing data transmitted in the MSC stream mode.

The SLI processing unit 720 processes the SLI output from the MSC processing unit 715. The SLI processing unit 720 processes SLI included in every IPDC service. The SLI processing unit 720 acquires an identifier for identifying IP packet data from an IP bearer and information on a configuration of the IP packet data from the PSLI included in the FIC.

The SLI includes the information on a configuration of the IP packet data, i.e., a location of SDP data or SDP data itself, a location of an IP data stream, and the identifier for identifying the IP packet data from the IP bearer. The IP bearer may be an MPEG-2 transport stream, and the identifier for identifying the IP packet data from the IP bearer may be a PID of an MPEG-2 transport stream packet. The SLI includes PSLI, which is service linkage information of the primary IPDC service which can be accessed at a single selection, and CSLI, which is service linkage information of the complete IPDC service which can be accessed at two or more selections.

The IPDC processing unit 730 generates the IP packet data using the SLI. That is, the IPDC processing unit 730 processes an IPDC service based on the identifier and the information on a configuration of the IP packet data, which have been acquired by the SLI processing unit 720. The IPDC processing unit 730 includes an SDP processing unit 731, an RTP/UDP/IP processing unit 733, and a media decoder 735. The SDP processing unit 731 processes the SDP data, and the RTP/UDP/IP processing unit 733 generates a media stream by depacketizing the IP packet data packetized using an RTP/UDP/IP packetization method. The media decoder 735 receives media configuration information from the SDP processing unit 731, receives the media stream from the RTP/UDP/IP processing unit 733, and decodes the media stream.

The user interface unit 740 receives a user input signal and transmits the user input signal to the SLI processing unit 720. If a selection signal for selecting an IPDC service is input from the user interface unit 740, the SLI processing unit 720 acquires an identifier for identifying IP packet data from an IP bearer and information on a configuration of the IP packet data from PSLI included in an FIC and controls the IPDC processing unit 730 to provide the IPDC service using the acquired information. Thus, a user can receive an IPDC service based on SLI delivered through an FIC by just selecting the IPDC service.

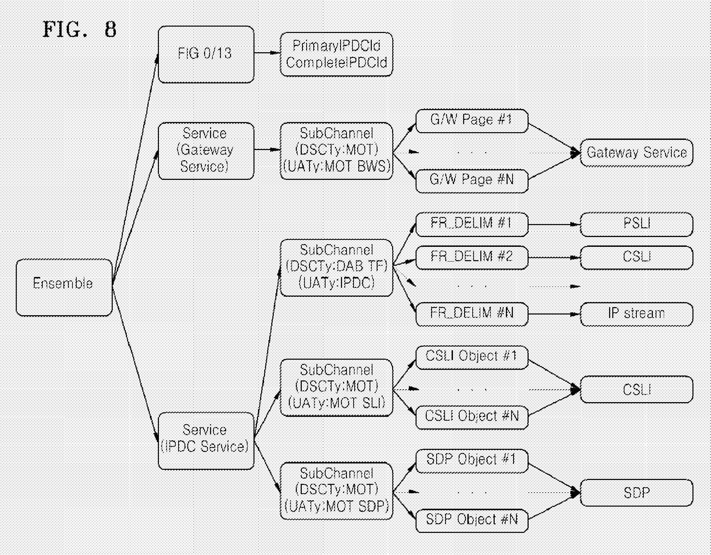

FIG. 8 illustrates a process of accessing a DAB-IPDC service according to an exemplary embodiment of the present invention.
Referring to FIG. 8, information indicating that an IPDC service is provided, a primary IPDCId, and a complete IPDCId are acquired from FIG 0/13 user application information. PSLI is obtained from a transport frame corresponding to an identifier (FR_DELIM #1) of the transport frame, which is indicated by the primary IPDCId. CSLI is obtained from a transport frame corresponding to an identifier (FR_DELIM #2) of the transport frame, which is indicated by the complete IPDCId.

A transport frame identifier and an SDP of a primary IPDC service are acquired from the PSLI and processed. Then, since a transport frame corresponding to the transport frame identifier acquired from the PSLI can be accessed, IP packet data can be obtained by processing the transport frame, and the IPDC service can be provided by processing the IP packet data. The primary IPDC service can be provided by an action of a user to select the IPDC service.

A transport frame identifier for providing a CSLI service is acquired by processing the CSLI. Then, since a transport frame corresponding to the transport frame identifier acquired from the CSLI can be accessed, IP packet data can be obtained by processing the transport frame, and the IPDC service can be provided by processing the IP packet data. The user can receive the IPDC service by selecting a complete IPDC service while the primary IPDC service is being processed. A CSLI object and an SDP object can be transmitted through the MOT protocol.

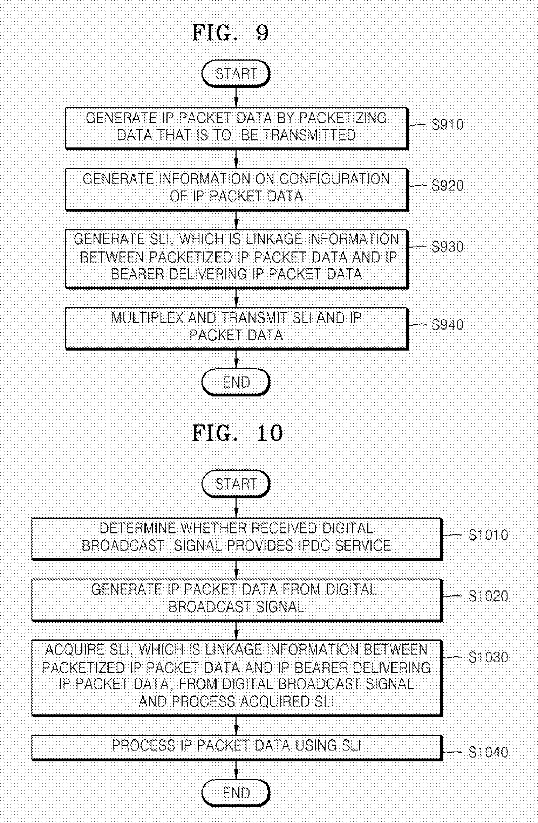

FIG. 9 is a flowchart illustrating a method of transmitting a DAB-IPDC service according to an exemplary embodiment of the present invention.
Referring to FIG. 9, IP packet data is generated by packetizing data that is to be transmitted in operation S910.
Information on a configuration of the IP packet data is generated in operation S920.

SLI, which is linkage information between the packetized IP packet data and an IP bearer delivering the IP packet data, is generated in operation S930. The SLI is constructed in every IPDC service.
The SLI and the IP packet data are multiplexed and transmitted in operation S940. PSLI is transmitted through an FIC. In addition, a primary ID, which is an identifier of a transport frame having the PSLI, and a complete ID, which is an identifier of a transport frame having CSLI, may be transmitted through the FIC.

FIG. 10 is a flowchart illustrating a method of receiving a DAB-IPDC service according to an exemplary embodiment of the present invention.
Referring to FIG. 10, it is determined in operation S1010 whether a received digital broadcast signal provides an IPDC service.
IP packet data is generated from the digital broadcast signal in operation S1020.

SLI, which is linkage information between the IP packet data and an IP bearer delivering the IP packet data, is acquired from the digital broadcast signal and processed in operation S1030. The SLI is acquired in every IPDC service and processed. A location of information on a configuration of the IP packet data, i.e., a location of SDP data or SDP data itself, a location of an IP data stream, and an identifier for identifying IP packet data from the IP bearer are acquired from the SLI.

A primary ID, which is an identifier of a transport frame having PSLI, and a complete ID, which is an identifier of a transport frame having CSLI, can be acquired from the FIC, and the PSLI and the CSLI can be acquired from the digital broadcast signal based on the primary ID and the complete ID. When the IP bearer is an MPEG-2 transport stream, the identifier for identifying IP packet data from the IP bearer may be a PID of a MPEG-2 transport stream packet.

The IP packet data is processed using the SLI in operation S1040.

That is, if the identifier for identifying IP packet data from the IP bearer and the information on a configuration of the IP packet data are acquired from the PSLI included in the FIC in operation S1030, a primary IPDC service can be processed and provided in operation S1040 based on the acquired identifier and the acquired information on a configuration of the IP packet data.

The invention can also be embodied, for example, as computer readable codes on a computer readable recording medium. Also, functional programs, codes, and code segments for accomplishing the exemplary embodiments of the present invention can be easily construed by programmers skilled in the art to which the present invention pertains. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

As described above, according to the exemplary embodiments of the present invention, by generating and using SLI for linking a DAB system and an IPDC system, the DAB system can effectively provide an IPDC service. In addition, since SLI is constructed in each of several IPDC services which can be included in a sub-channel, each IPDC service can be provided by receiving SLI within a short time compared to when a single piece of SLI is transmitted for several IPDC services.

In addition, by transmitting PSLI, or a primary ID and a complete ID through the FIC, a user can quickly receive an IPDC service based on the PSLI by selecting the IPDC service on a reception terminal.

While the present invention has been particularly shown and described with reference to exemplary embodiments thereof, it will be understood by those of ordinary skill in the art that various changes in form and details may be made therein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital broadcasting transmission apparatus for providing an Internet Protocol Datacasting (IPDC) service, the apparatus comprising:
an IPDC processing unit (610) which generates IP packet data by packetizing data to be transmitted and generates information on a configuration of the IP packet data;
a service linkage information (SLI) processing unit (620) which generates SLI which is linkage information between the IP packet data and an IP bearer which delivers the IP packet data; and
a transmitter (630) which multiplexes and transmits the SLI and the IP packet data.

2. The apparatus of claim 1, wherein the SLI comprises a location of information on a configuration of the IP packet data, a location of an IP data stream, and an identifier for identifying IP packet data from the IP bearer.

3. The apparatus of claim 1 or claim 2, wherein the SLI processing unit (620) constructs the SLI in every IPDC service.

4. The apparatus of any preceding claim, wherein an identifier for identifying the IP packet data from the IP bearer is a Program Identification (PID) of an MPEG-2 transport stream packet.

5. The apparatus of any preceding claim, wherein the SLI comprises:
Primary SLI (PSLI), which is service linkage information of a primary IPDC service which can be accessed at a single selection; and
Complete SLI (CSLI), which is service linkage information of a complete IPDC service which can be accessed at a plurality of selections.

6. The apparatus of claim 5, wherein the transmitter (630) transmits the PSLI through a Fast Information Channel (FIC).

7. The apparatus of claim 5 or claim 6, wherein the transmitter (630) transmits a primary ID, which is an identifier of a transport frame having the PSLI, and a complete ID, which is an identifier of a transport frame having the CSLI, through a Fast Information Channel (FIC).

8. The apparatus of any one of claims 5-7, wherein the transmitter (630) transmits the SLI through a Multimedia Object Transfer (MOT) protocol of a Main Service Channel (MSC).

9. A digital broadcast reception apparatus for providing an Internet Protocol Datacasting (IPDC) service, the apparatus comprising:
a receiver (710) which determines whether a received digital broadcast signal provides the IPDC service and generates IP packet data and service linkage information (SLI), which is linkage information between the IP packet data and an IP bearer delivering the IP packet data, from the digital broadcast signal;
an SLI processing unit (720) which processes the SLI; and
an IPDC processing unit (730) which processes the IP packet data using the SLI.

10. The apparatus of claim 9, wherein the SLI comprises a location of information on a configuration of the IP packet data, a location of an IP data stream, and an identifier for identifying IP packet data from the IP bearer.

11. The apparatus of claim 9 or claim 10, wherein the SLI processing unit (720) processes the SLI constructed in every IPDC service.

12. The apparatus of any one of claims 9-11, wherein an identifier for identifying IP packet data from the IP bearer is a Program Identification (PID) of an MPEG-2 transport stream packet.

13. The apparatus of any one of claims 9-12, wherein the SLI comprises:
Primary SLI (PSLI), which is service linkage information of a primary IPDC service which can be accessed at a single selection; and
Complete SLI (CSLI), which is service linkage information of a complete IPDC service which can be accessed at a plurality of selections.

14. The apparatus of claim 13, wherein the SLI processing unit (720) acquires the identifier for identifying IP packet data from the IP bearer and the information on a configuration of the IP packet data from the PSLI included in a Fast Information Channel (FIC), and
the IPDC processing unit (730) processes the IPDC service based on the acquired identifier and the acquired information on the configuration of the IP packet data.

15. The apparatus of claim 13 or claim 14, wherein the receiver (710) acquires a primary ID, which is an identifier of a transport frame having the PSLI, and a complete ID, which is an identifier of a transport frame having the CSLI, from the FIC, acquires the PSLI and the CSLI from the digital broadcast signal based on the primary ID and the complete ID, and transmits the acquired PSLI and CSLI to the SLI processing unit (720).

16. The apparatus of any one of claims 13-15, wherein the receiver transmits the SLI received through a Main Service Channel (MSC) to the SLI processing unit.

17. A digital broadcasting transmission method of providing an Internet Protocol Datacasting (IPDC) service, the method comprising:
generating IP packet data by packetizing data to be transmitted;
generating information on a configuration of the IP packet data;
generating service linkage information (SLI) which is linkage information between the IP packet data and an IP bearer delivering the IP packet data; and
multiplexing and transmitting the SLI and the IP packet data.

18. The method of claim 17, wherein the SLI comprises a location of information on a configuration of the IP packet data, a location of an IP data stream, and an identifier for identifying IP packet data from the IP bearer.

19. The method of claim 17 or claim 18, wherein the generating of the SLI comprises generating the SLI in every IPDC service.

20. The method of any one of claims 17-19, wherein an identifier for identifying IP packet data from the IP bearer is a Program Identification (ID) of an MPEG-2 transport stream packet.

21. The method of any one of claims 17-20, wherein the generating of the SLI comprises generating:
Primary SLI (PSLI), which is service linkage information of a primary IPDC service which can be accessed at a single selection; and
Complete SLI (CSLI), which is service linkage information of a complete IPDC service which can be accessed at a plurality of selections.

22. The method of any one of claims 17-21, wherein the multiplexing and transmitting of the SLI and the IP packet data comprises transmitting the PSLI through a Fast Information Channel (FIC).

23. The method of any one of claims 17-22, wherein the multiplexing and transmitting of the SLI and the IP packet data comprise transmitting a primary ID, which is an identifier of a transport frame having the PSLI, and a complete ID, which is an identifier of a transport frame having the CSLI, through a Fast Information Channel (FIC).

24. The method of any one of claims 17-23, wherein the multiplexing and transmitting of the SLI and the IP packet data comprises transmitting the SLI through a Multimedia Object Transfer (MOT) protocol of a Main Service Channel (MSC).

25. A digital broadcast reception method of providing an Internet Protocol Datacasting (IPDC) service, the method comprising:
determining whether a received digital broadcast signal provides the IPDC service;
generating IP packet data from the digital broadcast signal;
acquiring and processing service linkage information (SLI), which is linkage information between the IP packet data and an IP bearer delivering the IP packet data, from the digital broadcast signal; and
processing the IP packet data using the SLI.

26. The method of claim 25, wherein the SLI comprises a location of information on a configuration of the IP packet data, a location of an IP data stream, and an identifier for identifying the IP packet data from the IP bearer.

27. The method of claim 25 or claim 26, wherein the acquiring and processing of the SLI comprises acquiring the SLI in every IPDC service.

28. The method of any one of claims 25, wherein an identifier for identifying the IP packet data from the IP bearer is a Program Identification (PID) of an MPEG-2 transport stream packet.

29. The method of any one of claims 25-28, wherein the SLI comprises:
Primary SLI (PSLI), which is service linkage information of a primary IPDC service which can be accessed at a single selection; and
Complete SLI (CSLI), which is service linkage information of a complete IPDC service which can be accessed at a plurality of selections.

30. The method of claim 29, wherein the acquiring and processing of the SLI comprises acquiring an identifier for identifying the IP packet data from the IP bearer and the information on a configuration of the IP packet data from the PSLI included in a Fast Information Channel (FIC), and
the processing of the IP packet data comprises processing the IPDC service based on the acquired identifier and the acquired information on a configuration of the IP packet data.

31. The method of any one of claims 25-30, wherein the acquiring and processing of the SLI comprises:
acquiring a primary ID, which is an identifier of a transport frame having the PSLI, and a complete ID, which is an identifier of a transport frame having the CSLI, from a Fast Information Channel (FIC); and
acquiring the PSLI and the CSLI from the digital broadcast signal based on the primary ID and the complete ID.

32. The method of any one of claims 25-31, wherein the SLI is received through a Main Service Channel (MSC)

33. A computer readable recording medium storing a computer readable program for executing a method, the method comprising:
generating IP packet data by packetizing data to be transmitted;
generating information on a configuration of the IP packet data;
generating service linkage information (SLI) which is linkage information between the IP packet data and an IP bearer delivering the IP packet data; and
multiplexing and transmitting the SLI and the IP packet data.

34. A computer readable recording medium storing a computer readable program for executing a method, the method comprising:
determining whether a received digital broadcast signal provides the IPDC service;
generating IP packet data from the digital broadcast signal;
acquiring and processing service linkage information (SLI), which is linkage information between the IP packet data and an IP bearer delivering the IP packet data, from the digital broadcast signal; and
processing the IP packet data using the SLI.
